# Europäisches Patentamt

## European Patent Office

## Office européen des brevets

(11) Veröffentlichungsnummer: **0 296 444 B1**

(12) **EUROPÄISCHE PATENTSCHRIFT**

(45) Veröffentlichungstag der Patentschrift: **26.08.92**

(21) Anmeldenummer: **88109390.0**

(22) Anmeldetag: **13.06.88**

(51) Int. Cl.⁵: **H02P 5/168**, A61C 1/06

(54) **Schaltungsanordnung zur Steuerung der Drehzahl eines Gleichstromkleinstmotors.**

(30) Priorität: **25.06.87 DE 3721032**

(43) Veröffentlichungstag der Anmeldung:
**28.12.88 Patentblatt 88/52**

(45) Bekanntmachung des Hinweises auf die
Patenterteilung:
**26.08.92 Patentblatt 92/35**

(84) Benannte Vertragsstaaten:
**CH DE FR IT LI SE**

(56) Entgegenhaltungen:
**DE-A- 3 044 154**
**DE-A- 3 221 146**

(73) Patentinhaber: **SIEMENS AKTIENGESELL-
SCHAFT**
**Wittelsbacherplatz 2**
**W-8000 München 2(DE)**

(72) Erfinder: **Altendorf, Hans-Walter**
**Im Neusatz 4A**
**W-6520 Worms 25(DE)**

EP 0 296 444 B1

## Beschreibung

Die Erfindung betrifft eine Schaltungsanordnung zur Steuerung der Drehzahl eines Gleichstromkleinstmotors, bei der im Motorstromkreis ein Unterbrecherglied vorgesehen ist, welches den Motorstrom in wiederholter Folge impulsförmig unterbricht, bei der ferner die Generator-EMK nach Abschalten des Motorstromes synchron zur Motorstromunterbrechung abgetastet wird und bei der der abgetastete Wert einer Vergleicherschaltung als Istwert zugeführt wird, welcher als Sollwert einer der gewünschten Drehzahl entsprechenden Sollgröße zugeführt wird und bei der die aus dem Soll/Ist-Vergleich gewonnene Regelgröße einem Steuerteil (MC) zugeführt wird, welcher eine Leistungsstufe mit dem Unterbrecherglied ansteuert, unter Verwendung eines Pulsdauermodulators zur Steuerung von Strom und Spannung des Motors, wobei der Pulsdauermodulator so aufgebaut ist, daß seine Impulspausen stets hinreichend groß sind, um eine EMK-Messung durchführen zu können.

Insbesondere für den Antrieb zahnärztlicher Werkzeuge, wie Bohrer, Schleifer, etc. werden Gleichstromkleinstmotoren eingesetzt, die in einem Spannungsbereich bis 24 Volt betrieben werden. Um die Werkzeuge in einem sehr weiten Drehzahlbereich (zwischen einigen 100 und 160.000 Upm) betreiben zu können, muß man motorseitig bereits eine relativ große Drehzahleinstellmöglichkeit vorsehen. Bei einem bekannten solchen Gleichstromkleinstmotor ist es möglich, die Drehzahl zwischen etwa 2.000 und 40.000 Upm zu variieren. Eine weitere Anhebung bzw. Absenkung der Drehzahl auf die oben erwähnten maximalen bzw. minimalen Drehzahlen der Werkzeuge erfolgt im Anschluß an den Motor, also auf der Wellenabseite durch unterschiedliche Getriebeabstufungen der Getriebe, die die auf die Antriebswelle aufgesetzten Handstücke bzw. die die Werkzeuge aufnehmenden Handstückköpfe enthalten.

Aus der DE-OS 32 21 146 ist eine Schaltungsanordnung der eingangs genannten Gattung bekannt, bei der die Drehzahl durch Takten der Betriebsspannung und EMK-Messung in den Pulspausen geregelt wird. Hierzu ist im Motorstromkreis eine Unterbrecherschaltung vorgesehen. Ferner ist eine die Motorspannung abtastende und speichernde Abtast- und Speicherschaltung vorgesehen, ein Regler für eine steuerbare Spannungsquelle, dem als Sollwert eine Steuerspannung und als Istwert der jeweils von der Abtast- und Speicherschaltung gespeicherte Motorspannungswert zugeführt wird. Ferner ist eine Zeitsteuerschaltung vorgesehen, welche die Unterbrecherschaltung wiederholt kurzzeitig zum Unterbrechen des Motorstromes und die Abtast- und Speicherschaltung mit Verzögerung nach Beginn der Unterbrechung des Motorstromes, jedoch vor deren Beendigung zur Abtastung des Motorspannungswertes, veranlaßt.

Bei der bekannten Schaltung wird der Motor in der Unterbrechungsphase als Generator betrieben, wobei die Generator-EMK als Ist-Wert für eine Regelschaltung verwendet wird. Die Unterbrechung der Motorstromversorgung ist so gewählt, daß sie nach der Feldabbau-Phase beginnt. Die Tast- oder Wiederholungsfrequenz liegt bei der bekannten Schaltungsanordnung zwischen 10 und 1.000 Hz, die Abtastzeit liegt zwischen 5 und 30 $\mu$sec, bei einer Ausschaltzeit des Motorstromes von 250 bis 500 $\mu$sec.

Die bekannte Schaltungsanordnung ist vergleichsweise aufwendig, insbesondere wegen der steuerbaren Spannungsquelle, die mit einem relativ teuren Leistungsteil versehen sein muß, da dieser praktisch für die gesamte Betriebsleistung auszulegen ist.

Aus der DE-A-30 44 154 ist ein Verfahren zur Steuerung und/oder Regelung der Betriebsspannung von Elektromotoren bekannt, bei dem der Leistungskreis des Motors mittels eines Steuersignals gesteuert wird, welches durch Uberlagerung zweier Signale mit unterschiedlicher Frequenz erzeugt wird, wobei zur Erzielung eines Regeleffektes das Tastverhältnis mindestens eines der beiden Signale variiert wird. Bei diesem Verfahren wird von einer Phasenanschnittsteuerung ausgegangen, die durch Verknüpfung mit einer Impulsbreitensteuerung ergänzt wird. Unterschiedliche Soll-Drehzahlen werden bei diesem Verfahren durch bestimmte Impulsbreiten vorgegeben.

Der im Anspruch 1 angegebenen Erfindung liegt die Aufgabe zugrunde, eine Schaltungsanordnung der eingangs genannten Gattung dahingehend zu verbessern, daß gegenüber dem Stand der Technik ein einfacherer und kostengünstiger Schaltungsaufbau erreicht wird, mit welchem sich insbesondere ein gleichmäßiger Motorstromfluß und damit ein besonders laufruhiger, vibrationsfreier Motor erzielen läßt.

Die erfindungsgemäße Schaltungsanordnung verarbeitet die volle, ungeregelte Betriebsspannung, ohne einen aufwendigen Schaltregler und eine stabilisierte Spannung zur Erzeugung der Motorspannung zu benötigen. Durch eine entsprechend hohe Schaltfrequenz des einen Pulsdauermodulators, mit der der Ausgang des anderen niederfrequenten Pulsdauermodulators moduliert wird, läßt sich auch ein besonders vibrationsfreier Lauf des Motors erzielen.

Vorteilhafte Ausgestaltungen und Weiterbildungen der Erfindung ergeben sich aus der nachstehenden Beschreibung eines Ausführungsbeispiels. Es zeigen:

Figur 1 ein Prinzipschaltbild der erfindungsgemäßen Schaltungsanordnung,

Figur 2 eine Darstellung der Impulsdiagramme.

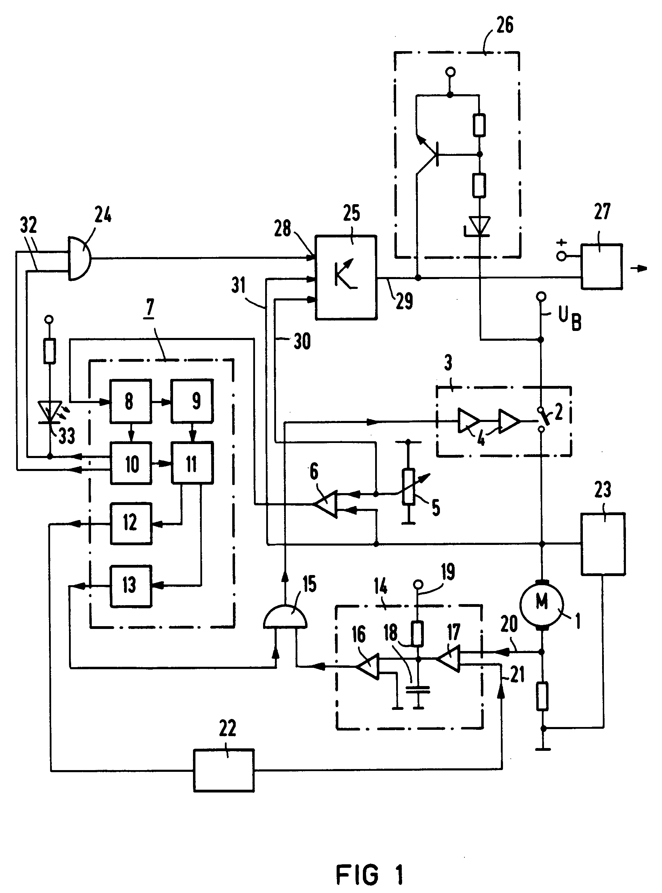

Die Figur 1 zeigt ein Prinzipschaltbild der erfindungsgemäßen Schaltungsanordnung zur Steuerung der Drehzahl eines Gleichstromkleinstmotors für den Antrieb zahnärztlicher Hand- und Winkelstücke.

Im Stromkreis des Motors 1 ist ein Unterbrecher 2 vorgesehen, der Teil eines allgemein mit 3 bezeichneten Leistungsteils ist, welcher einen einstufigen, vorzugsweise jedoch einen 2-stufigen, Treiber 4 enthält. Mittels eines Stellgliedes 5 (Potentiometer) kann in bekannter Weise der Sollwert der Motordrehzahl individuell eingestellt werden. Der Istwert wird aus dem Motorstromkreis entnommen und ebenfalls dem Komparator 6 zugeführt. Am Ausgang des Komparators 6 liegt keine Feststellung einer Regelabweichung vor, sondern lediglich eine Ja/Nein-Information darüber, ob der Istwert größer oder kleiner ist als der Sollwert. Diese Information wird in einen allgemein mit 7 bezeichneten Mikrocontroller gegeben, der sechs Funktionsblöcke 8 bis 13 enthält.

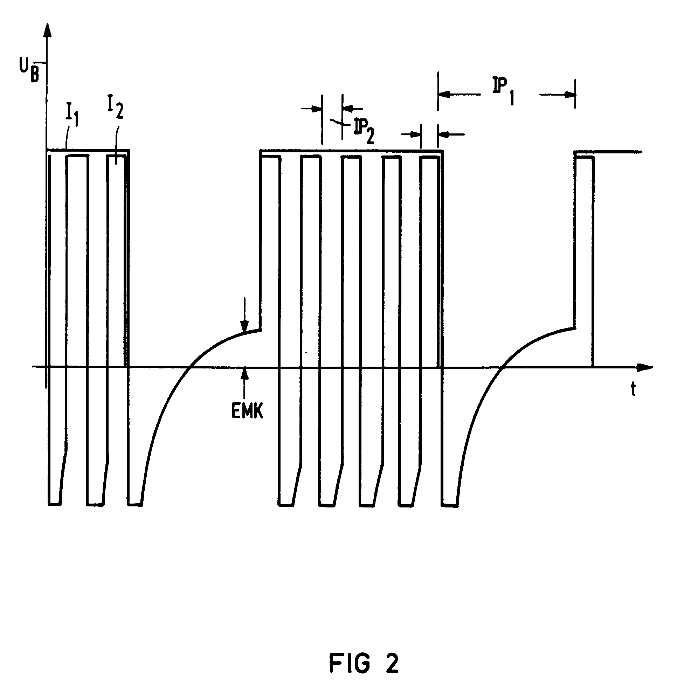

Der Funktionsblock 8 dient zur Aufbereitung der vorgenannten Regelabweichung; eine entsprechende Information wird einerseits an einen Funktionsblock 9 gegeben, der eine Information über den Anlaufzustand des Motors gibt und andererseits an einen Funktionsblock 10 gegeben, der als Regler arbeitet, d.h. die Regelabweichung aus dem Funktionsblock 8 entsprechend der Übertragungsfunktion verarbeitet, und der das Ergebnis dann dem Funktionsblock 11 zuführt. In einem Funktionsblock 11 werden sowohl die Informationen über den Anlaufzustand des Motors aus dem Funktionsblock 9 als auch die Informationen aus dem Reglerfunktionsblock 10 bewertet und sodann sowohl einem Funktionsblock 12 zur Steuerung eines externen Pulsdauermodulators 14 (PDM 2) als auch dem Funktionsblock 13 zugeführt. Der Funktionsblock 11 besteht praktisch aus einem Speicher, in dem die Informationen einerseits über den Anlaufzustand und andererseits über die Energiezufuhr zum Motor vom Regler erfaßt und aktualisiert werden. Mit diesen Informationen werden dann der Funktionsblock 13 (erster Pulsdauermodulator PDM 1) bzw. über den Funktionsblock 12 der Pulsdauermodulator 14 (PDM 2) angesteuert. Der zuerst genannte Pulsdauermodulator 13 (PDM 1) erzeugt niederfrequente Impulse ($I_1$) von ca. 10 Hz bis 10 kHz, deren Impulshöhen sich mit der Betriebsspannung $U_B$ des Motors ändern. Wie aus dem Diagramm in Figur 2 ersichtlich, sind die Impulspausen ($IP_1$) dieser Impulse so gewählt, daß sie hinreichend groß sind, um eine EMK-Messung durchführen zu können. Die vom Funktionsblock 13 wegführenden Informationen werden an ein UND-Verknüpfungsglied 15 gegeben, an das auch die ausgehenden Informationen vom Pulsdauermodulator 14 (PDM 2) geführt werden. Beide Steuersignale gehen nach der Verknüpfung im UND-Glied 15 auf dasselbe Leistungsteil 3, welches den Unterbrecher 2 und damit den Motorstromkreis nur dann schließt, wenn beide Pulsdauermodulatoren (PDM 1 und PDM 2) Impulse abgeben. Ein Vorteil dieser Schaltung ist darin zu sehen, daß nur eine einzige Leistungsstufe erforderlich ist. Eine Siebung kann ebenfalls entfallen, da der Motor direkt mit der modulierten Spannung betrieben werden kann. Die gesamte Ablaufsteuerung einschließlich der Zeitüberwachung bezüglich des EMK-Anstiegs und der niederfrequenten Pulsdauermodulation übernimmt der Mikrocontroller 7. Der Pulsdauermodulator 14 enthält zwei Komparatoren 16, 17 und ein RC-Glied 18, welches über eine stabilisierte Spannung am Anschluß 19 gespeist wird. Der Pulsdauermodulator 14 ist so aufgebaut, daß seine Impulspausen ($IP_2$) klein genug sind, um zu verhindern, daß der Motorstrom, der über die Steuerleitung 20 erfaßt wird, zu weit absinkt oder gar unterbrochen wird. Zweckmäßigerweise sollte der Motorstrom nicht weiter absinken als etwa 10 % unter den mittleren Motorstrom. Die Frequenz des Pulsdauermodulators 14 ist sehr viel höher als die des Pulsdauermodulators 13; sie liegt vorteil)afterweise oberhalb des hörbaren Frequenzbereiches (>20 kHz). Der Komparator 17 vergleicht die motorstromabhängige Spannung, die über die Steuerleitung 20 abgegriffen wird, mit einem Steuersignal aus dem Funktionsblock 12, welches über die Steuerleitung 21 an dem Komparator 17 gegeben wird. Der Ausgang des Komparators 17 entlädt den Kondensator des RC-Gliedes 18, welches die Abschaltzeit (Pulspause $IP_2$) der Pulsdauermodulation bestimmt. Die Einschaltzeit wird durch die komplexe Last des Motors bestimmt. Die Induktivität des Motors erzeugt nämlich bei einem Spannungssprung einen linearen Stromanstieg, der, abhängig von Spannung am Motor und Induktivität des Motors, zur Erzeugung der Einschaltzeit genutzt wird. Da das Spannungs-/Zeitintegral $\int u(t)dt$, das während eines Pulses effektiv über der Induktivität des Motors liegt, durch die Regelung konstant gehalten wird (der ohmsche Anteil der Motorlast wird durch die Regelung kompensiert) und die Induktivität eine Motorkonstante ist, bleibt die Einschaltzeit auch bei Belastung des Motors annähernd konstant, sofern sich die Steuerspannung die über die Steuerleitung 21 erhalten wird nicht ändert.

Mit 22 ist ein DA-Wandler bezeichnet, mit dem der Mikrocontroller 7 die Umschaltschwelle des Komparators 17 verändern kann, was gleichbedeutend ist mit einer Änderung des Spitzenstromes durch den Motor. Dadurch bleibt die Abschaltzeit des Motors konstant und die Einschaltzeit wird vergrößert, wodurch auch der Effektivstrom durch den Motor größer wird. Wie bereits erwähnt, ist die Abschaltzeit so kurz gewählt, daß der Motorstrom während dieser Zeit nur um etwa 10 % abfällt. Der Motorstrom fließt während dieses Zeitraumes über einen Freilaufkreis 23, der auch zur Ableitung von induktiven Spannungsspitzen während der Taktflanke dient.

Der DA-Wandler kann aufgebaut sein:

a) als ein Wandler, der einen beliebigen binären Code in eine Spannung oder einen Strom umsetzt,

b) als Frequenz-Spannungswandler, der eine vom Mikrocontroller vorgegebene Frequenz in eine Spannung oder einen Strom umsetzt,

c) als Siebglied, welches den Mittelwert aus einer gepulsten, vom Mikrocontroller abgegebenen Spannung bildet, oder

d) als Zeit-Spannungswandler, der einen Zeitunterschied zwischen zwei vom Mikrocontroller abgegebenen Impulsen in eine Spannung oder einen Strom umsetzt. Dies kann z.B. ein Integrator mit nachgeschaltetem Abtast- und Halteverstärker oder ein Sägezahngenerator mit Spitzenwertdetektor sein.

Für kostengünstige Anwendungen kann der DA-Wandler durch ein Widerstandsnetz ersetzt werden, mit dem Vorteil, daß keine aktiven Bauteile für den Wandler benötigt werden, da der Komparatoreingang von Position 17 bei Verwendung von Standardbauelementen ohnehin hochohmig ist.

Zur Überwachung auf Fehldosierung, wie sie die Geräteverordnung bei medizinischen Geräten nunmehr vorschreibt, kann zweckmäßigerweise eine entsprechende Überwachungsschaltung vorgesehen werden. Diese besteht aus den Teilen 24 bis 27, wobei 25 ein Fensterdiskriminator mit Inhibitionseingang 28 ist, was bedeutet, daß, wenn der Eingang 28 aktiv ist, der Ausgang 29 inaktiv ist. Mit 26 ist ein Überspannungsteil bezeichnet, welches die Betriebsspannung $U_B$ bei Auftreten einer unzulässig hohen Spannung am Leistungsteil 3 erfaßt und sodann einen Signalgeber (z.B. Lautsprecher) aktiviert. Mittels einer Steuerleitung 30 wird der Sollwert der EMK an die Fenstermitte des Fensterdiskriminators 25 gelegt; über die Steuerleitung 31 wird die EMK am Motor 1 abbgegriffen und auf den Eingang des Fensterdiskriminator 25 gegeben. Über das Leitungspaar 32 wird der Fensterdiskriminator 25 vom Reglerfunktionsblock 10 des Mikrocontrollers 7 aus so angesteuert, daß die EMK-Messung nur während der dafür vorgesehenen Pulspausenzeit erfolgt. Die Verdoppelung der Leitung erfolgt dabei aus sicherheitstechnischen Gründen. Mit 33 ist ein Test-LED bezeichnet, mit deren Hilfe die Funktionsfähigkeit des Mikrocontrollers 7 erkannt werden kann. Bei abgeschaltetem (stehendem) Motor führt der Mikrocontroller einen Selbsttest durch. Falls kein Fehler vorliegt, blinkt die LED; liegt ein Fehler vor, leuchtet die LED nicht oder sie leuchtet ständig. Ist der Motor in Betrieb, so kann anhand der Helligkeit der LED die Energieabgbe an den Motor abgeschätzt werden, d.h. leuchtet die LED hell, so wird vom Motor wenig Leistung abverlangt, wird viel Leistung abverlangt, so leuchtet die LED dunkler. Der Übergang kann stufenlos sein.

## Patentansprüche

1. Schaltungsanordnung zur Steuerung der Drehzahl eines Gleichstromkleinstmotors (1), bei der im Motorstromkreis ein Unterbrecherglied (2) vorgesehen ist, welches den Motorstrom in wiederholter Folge impulsförmig unterbricht, bei der ferner die Generator-EMK nach Abschalten des Motorstromes synchron zur Motorstromunterbrechung abgetastet wird und bei der der abgetastete Wert einer Vergleicherschaltung (6) als Istwert zugeführt wird, welcher als Sollwert einer der gewünschten Drehzahl entsprechenden Sollgröße zugeführt wird und bei der die aus dem Soll-/Ist-Vergleich gewonnene Regelgröße einem Steuerteil (7) zugeführt wird, welcher eine Leistungsstufe (3) mit dem Unterbrecherglied (2) ansteuert, unter Verwendung eines Pulsdauermodulators (13) zur Steuerung von Strom und Spannung des Motors (1), wobei der Pulsdauermodulator (13) so aufgebaut ist, daß seine Impulspausen stets hinreichend groß sind, um eine EMK-Messung durchführen zu können, **dadurch gekennzeichnet,** daß ein zweiter Pulsdauermodulator (14) vorgesehen ist, der unabhängig vom ersten Pulsdauermodulator (13) den Motorstrom regelt, wobei der erste Pulsdauermodulator (13) niederfrequente Impulse erzeugt, während der zweite Pulsdauermodulator (14) demgegenüber höherfrequente Impulse mit einer oberhalb des hörbaren Frequenzbereichs liegenden Frequenz erzeugt, deren Impulspausen kurz genug sind, um zu verhindern, daß der Motorstrom um mehr als etwa 10 % absinkt oder unterbrochen wird und daß die Ausgangssignale der beiden Pulsdauermodulatoren (13, 14) einem Verknüpfungsglied (15) zugeführt werden, welches das Unterbrecherglied (2) und damit den Motorstromkreis stets dann schließt, wenn beide Pulsdauermodulatoren Impulse abgeben.

2. Schaltungsanordnung nach Anspruch 1, **dadurch gekennzeichnet,** daß der zweite Pulsdauermodulator (14) aus zwei Komparatoren (16, 17) und einem RC-Glied (18), welches die Impulspausenzeit bestimmt, gebildet ist und durch eine dem Motorstrom proportionale Spannung gesteuert wird.

3. Schaltungsanordnung nach Anspruch 1, **dadurch gekennzeichnet,** daß der erste Pulsdauermodulator (13) einen Funktionsblock bildet, der zusammen mit weiteren Funktionsblöcken (8 bis 12) Bestandteil eines Mikrocontrollers (7) ist.

4. Schaltungsanordnung nach Anspruch 3, **dadurch gekennzeichnet,** daß der Microcontroller folgende Funktionsblöcke enthält, einen Funktionsblock (8) zur Erzeugung einer Regelabweichung entsprechend einem Soll-Istwert-Vergleich der Motordrehzahl, einen Funktionsblock (9) zur Erfassung des Anlaufzustandes des Motors, einen Reglerfunktionsblock (10), einen Funktionsblock (11) zur Bewertung der Informationen einerseits aus dem Regelfunktionsblock (10) und andererseits aus dem Anlaufzustand des Motors, einen Funktionsblock (12) zur Steuerung des zweiten Pulsdauermodulators (14) und einen den ersten Pulsdauermodulator beinhaltenden Funktionsblock (13).

5. Schaltungsanordnung nach Anspruch 3, **dadurch gekennzeichnet,** daß zwischen dem Mikrocontroller (7) und dem zweiten Pulsdauermodulator (14) ein DA-Wandler (22) geschaltet ist.

6. Schaltungsanordnung nach Anspruch 5, **dadurch gekennzeichnet,** daß der DA-Wandler (22) durch ein Standardwiderstandsnetzwerk ersetzt ist.

7. Schaltungsanordnungg nach Anspruch 4, **dadurch gekennzeichnet,** daß der Reglerfunktionsblock (10) Signale zur Steuerung einer Überwachungsschaltung (24 bis 32) abgibt.

8. Schaltungsanordnung nach Anspruch 7, **dadurch gekennzeichnet,** daß die Überwachungsschaltung (24 bis 32) einen Fensterdiskriminator (25) mit Inhibitionseingang (28) enthält, wobei am Eingang (31) des Fensterdiskriminators (25) die Motorspannung und an der Fenstermitte (30) der Sollwert der EMK anliegt.

9. Schaltungsanordnung nach Anspruch 8, **dadurch gekennzeichnet,** daß ein Überspannungsteil (26) vorgesehen ist, welches die Betriebsspannung (U$_B$) bei Auftreten einer unzulässig hohen Spannung am Leistungsteil (3) erfaßt und sodann einen Signalgeber (27) aktiviert.

10. Schaltungsanordnung nach Anspruch 4, **da-**

**durch gekennzeichnet,** daß eine mit dem Reglerfunktionsbereich (10) verbundene Test-LED (33) vorgesehen ist, welche die Funktionsfähigkeit des Mikrocontrollers (7) anzeigt.

**Claims**

1. A circuit arrangement for controlling the speed of a direct current miniature motor (1), in which in the motor current circuit there is provided an interrupter element (2), which interrupts the motor current in a repeated series in the form of pulses, in which furthermore the EMF-generator is scanned synchronously to the motor current interruption once the motor current is disconnected, and in which the scanned value is supplied to a comparison circuit (6) as an actual value, which value is supplied as a desired value of a reference variable corresponding to the desired speed, and in which the controlled variable resulting from the desired/actual comparison is supplied to a control part (7), which controls a power output element (3) with the interrupter element (2), using a pulse duration modulator (13) for controlling the current and voltage of the motor (1), wherein the pulse duration modulator (13) is constructed such that its pulse pauses are constantly sufficiently great in order to be able to carry out EMF measurement, characterised in that a second pulse duration modulator (14) is provided, which, independently of the first pulse duration modulator (13), regulates the motor current, wherein the first pulse duration modulator (13) generates low-frequency pulses, whilst the second pulse duration modulator (14) generates higher-frequency pulses compared with this with a frequency lying above the audible frequency range, the pulse pauses of which are short enough in order to prevent the motor current dropping by more than approx. 10 % or being interrupted, and in that the output signals of both pulse duration modulators (13,14) are supplied to a logic gate (15), which continuously closes the interrupter element (2) and therefore the motor current circuit when both pulse duration modulators emit pulses.

2. A circuit arrangement according to claim 1, characterised in that the second pulse duration modulator (14) is formed from two comparators (16, 17) and an RC element (18), which determines the pulse pause time, and is controlled by a voltage proportional to the motor current.

3. A circuit arrangement according to claim 1, characterised in that the first pulse duration modulator (13) forms a function block, which together with further function blocks (8 to 12) is a component part of a micro-controller (7).

4. A circuit arrangement according to claim 3, characterised in that the micro controller contains the following function blocks, a function block (8) for generating a system deviation corresponding to a desired/actual value comparison of the motor speed, a function block (9) for detecting the acceleration state of the motor, a control function block (10), a function block (11) for evaluating the information on the one hand from the control function block (10), and on the other hand from the acceleration state of the motor, a function block (12) for controlling the second pulse duration modulator (14) and a function block (13) containing the first pulse duration modulator.

5. A circuit arrangement according to claim 3, characterised in that between the micro-controller (7) and the second pulse duration modulator (14) there is connected a D/A converter (22).

6. A circuit arrangement according to claim 5, characterised in that the D/A converter (22) is replaced by a standard resistance network.

7. A circuit arrangement according to claim 4, characterised in that the control function block (10) delivers signals for controlling a monitoring circuit (24 to 32).

8. A circuit arrangement according to claim 7, characterised in that the monitoring circuit (24 to 32) contains a window discriminator (25) with a disable input (28), wherein applied at the input (31) of the window discriminator (25) is the motor voltage and at the centre of the window (30) is the desired value of the EMF.

9. A circuit arrangement according to claim 8, characterised in that an overvoltage part (26) is provided, which detects the operating voltage ($U_B$) when an impermissibly high voltage appears at the power output element (3) and then activates a signal generator (27).

10. A circuit arrangement according to claim 4, characterised in that a test-LED (33) connected to the control function region (10) is provided, which indicates the functionability of the micro-controller (7).

**Revendications**

1. Montage pour commander la vitesse de rotation d'un moteur miniature à courant continu (1), dans lequel il est prévu, dans le circuit du moteur, un circuit interrupteur (2), qui interrompt le courant du moteur de façon impulsionnelle selon une séquence répétée, et dans lequel, en outre, la force électromotrice du générateur est échantillonnée, après l'interruption du courant du moteur, d'une manière synchrone avec cette interruption et dans lequel la valeur échantillonnée est envoyée à un circuit comparateur (6), en tant que valeur réelle, qui est délivrée en tant que valeur de consigne d'une grandeur de consigne correspondant à la vitesse de rotation désirée et dans lequel la grandeur de réglage obtenue à partir de la comparaison valeur de consigne/valeur réelle est envoyée à une partie de commande (7), qui commande un étage de puissance (3) comportant le circuit interrupteur (2), moyennant l'utilisation d'un démodulateur (13) de durée des impulsions pour la commande du courant et de la tension du moteur (1), le modulateur (13) de la durée des impulsions étant agencé de telle sorte que ses pauses entre impulsions sont toujours suffisamment longues pour pouvoir exécuter une mesure de la force électromotrice, caractérisé par le fait qu'il est prévu un second modulateur (14) de durée des impulsions, qui règle le courant du moteur indépendamment du premier modulateur (13) de durée des impulsions, ce dernier produisant des impulsions à basse fréquence, tandis que le second modulateur (14) de durée des impulsions produit des impulsions à une fréquence supérieure à celle des précédentes et située audessus d'une gamme de fréquences audibles, les pauses entre impulsions étant suffisamment courtes pour empêcher que le courant du moteur diminue de plus d'environ 10 % ou soit interrompu, et que les signaux de sortie des deux modulateurs (13,14) de durées des impulsions sont envoyés à un circuit combinatoire (15), qui ferme le circuit interrupteur (2) et par conséquent le circuit du moteur chaque fois que les deux modulateurs de durée des impulsions délivrent des impulsions.

2. Montage suivant la revendication 1, caractérisé par le fait que le second modulateur (14) de durées des impulsions est constitué par deux comparateurs (16,17) et un circuit RC (18), qui détermine la durée des pauses entre impulsions, et est commandé par une tension proportionnelle au courant du moteur.

3. Montage suivant la revendication 1, caractérisé par le fait que le premier modulateur (13) de durée des impulsions forme un bloc fonctionnel qui fait partie, ainsi que d'autres blocs fonctionnels (8 à 12), d'un microcontrôleur (7).

4. Montage suivant la revendication 3, caractérisé par le fait que le microcontrôleur comporte les blocs fonctionnels suivants, à savoir un bloc fonctionnel (8) pour produire un écart de régulation correspondant à une comparaison valeur de consigne-valeur réelle de la vitesse de rotation du moteur, un bloc fonctionnel (9) servant à détecter l'état au démarrage du moteur, un bloc fonctionnel formant régulateur (10), un bloc fonctionnel (11) servant à évaluer les informations provenant, d'une part, du bloc fonctionnel de régulation (6), et, d'autre part, à partir de l'état au démarrage du moteur, un bloc fonctionnel (12) servant à commander le second modulateur (14) de durée des impulsions et un bloc fonctionnel (13) comporte le premier modulateur de durée des impulsions.

5. Montage suivant la revendication 3, caractérisé par le fait qu'un convertisseur numérique/analogique (22) est branché entre le microcontrôleur (7) et le second modulateur (14) de durée des impulsions.

6. Montage suivant la revendication 5, caractérisé par le fait que le convertisseur numérique/analogique (22) est remplacé par un réseau de résistances standards.

7. Montage suivant la revendication 4, caractérisé par le fait que le bloc fonctionnel formant régulateur (10) délivre des signaux pour la commande d'un circuit de contrôle (24 à 32).

8. Montage suivant la revendication 7, caractérisé par le fait que le circuit de contrôle (24 à 32) comporte un discriminateur à fenêtre (25) possédant une entrée d'inhibition (28), la tension du moteur étant appliquée à l'entrée (31) du discriminateur à fenêtre (25) tandis que la valeur de consigne de la force électromotrice est appliquée au centre (30) de la fenêtre.

9. Montage suivant la revendication 8, caractérisé par le fait qu'il est prévu une partie (26) de détection des surtensions, qui détecte la tension de service ($U_B$) lors de l'apparition d'une tension élevée inadmissible dans la sortie de puissance (3) et active alors un générateur de signaux (27).

10. Montage suivant la revendication 4, caractérisé par le fait qu'il est prévu une diode LED de test (33), qui est raccordée à la zone fonctionnelle formant régulateur (10) et affiche l'aptitude de fonctionnement du microcontrôleur (7).

FIG 1

FIG 2